Europäisches Patentamt

European Patent Office

Office européen des brevets

(19)

(11) Veröffentlichungsnummer: **0 092 816**

A2

(12) **EUROPÄISCHE PATENTANMELDUNG**

(21) Anmeldenummer: 83103948.2

(22) Anmeldetag: 22.04.83

(51) Int. Cl.³: **B 65 G 1/04**
**B 65 G 37/02**

(30) Priorität: 23.04.82 DE 3215160

(43) Veröffentlichungstag der Anmeldung:
02.11.83 Patentblatt 83/44

(84) Benannte Vertragsstaaten:
AT BE CH DE FR GB IT LI NL SE

(71) Anmelder: Gebhardt Fördertechnik GmbH
Postfach 304
D-6920 Sinsheim(DE)

(72) Erfinder: Felder, Hans Christian, Dipl.-Ing.
Forsthausstrasse 12
D-6022 Dreieichenhain(DE)

(74) Vertreter: Neugebauer, Bernhard
Tölzer Strasse 7
D-7100 Heilbronn(DE)

(54) Sortiervorrichtung für Stückgut.

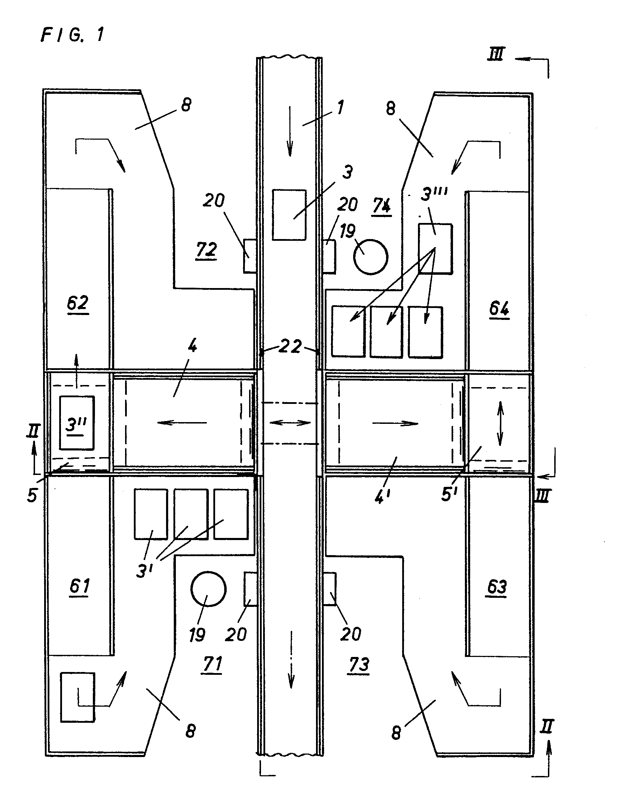

(57) In Warenlagern mit einer großen Anzahl von unterschiedlichen Warenarten müssen laufend Waren ihrem zugehörigen Lagerplatz zugeführt werden. Die ungeordnet ankommenden Waren müssen kontrolliert, sortiert, registriert und weitergeleitet werden. Dies bedeutet einen erheblichen Aufwand an Fördermitteln und eine Vielzahl von Handhabungen. Aufgabe der Erfindung ist es daher, eine Sortiervorrichtung zu schaffen, die bei enger räumlicher Ausdehnung eine hohe Sortierleistung ermöglicht. Gelöst wird diese Aufgabe durch eine Sortiervorrichtung mit einem zufördernden Hauptförderer mit Querförderer und angeschlossenem Nebenförderer dadurch, daß am Ausgang des Nebenförderers (4, 4') und senkrecht zu diesem ein reversierbar antreibbarer Verteilförderer (5, 5') vorgesehen ist, der mit seinen beiden Enden über Zwischenbahnen (61 bis 64) mit je einer Sortierstation (71 bis 74) verbunden ist, denen eine Abförderbahn (10) gemeinsam zugeordnet ist. Die Sortiervorrichtung ist in Figur 1 umfassend dargestellt.

FIG. 1

Croydon Printing Company Ltd.

## Sortiervorrichtung für Stückgut

Die Erfindung betrifft eine Sortiervorrichtung für Stückgut mit einem zufördernden Hauptförderer, in dem ein Querförderer angeordnet ist, an den ein Nebenförderer angeschlossen ist.

In Warenlagern mit einer großen Anzahl von unterschiedlichen Warenarten müssen laufend Waren ihrem zuständigen Lagerplatz zugeführt werden. Die ungeordnet ankommenden Waren müssen so kontrolliert, sortiert und dann weitergeleitet werden. Da an jeder Sortierstation alle Warenarten bearbeitet werden müssen, ist die Verbindung jeder Sortierstation mit jedem Einzellager unerläßlich. Zudem ist jede Ware im zentralen Speicher zu registrieren, um eine Kontrolle über den jeweiligen Lagerbestand und die Warenbewegung zu erhalten. Die in der Sortiervorrichtung zu bewältigenden Arbeiten sind daher umfangreich und vielfältig.

Aufgabe der Erfindung ist es daher, eine Sortiervorrichtung zu schaffen, die bei enger räumlicher Ausdehnung eine hohe Sortierleistung ermöglicht.

Diese Aufgabe wird durch die Erfindung dadurch gelöst, daß am Ausgang des Nebenförderers und senkrecht zu diesem ein reversierbar antreibbarer Verteilförderer vorgesehen ist, der mit seinen beiden Enden über Zwischenbahnen mit je einer Sortierstation verbunden ist, denen eine Abförderbahn gemeinsam zugeordnet ist.

Die mit der Erfindung erzielten Vorteile bestehen insbesondere darin, daß durch den Querförderer ein rasches Ausschleusen aus dem Hauptförderer möglich ist, damit auf diesem mit hoher Geschwindigkeit bei dichter Gutfolge transportiert werden kann. Weiterhin wird durch die nachgeschalteten Förderer eine weitere Verteilung der Stückgüter mit Stau- und Speichermöglichkeiten erreicht. Jede Sortierstation kann so stets und ausreichend mit zu sortierenden Stückgütern versorgt werden.
Nach dem Sortieren und Registrieren werden die Stückgüter
mit neuer Zielgebung auf einer mehreren Sortierstationen gemeinsam zugeordneten Abförderbahn weiter, z.B. zum zugehörigen Lagerplatz, transportiert. Durch die Konzentration der
Stückgüter auf der Abförderbahn erfolgt auch dieser Abtransport in raumsparender Weise. Die Sortiervorrichtung nach der
Erfindung besitzt infolge der Auslegung und Anordnung der
verschiedenen Förderer eine hohe Raumausnutzung und eine handliche Ausbildung der Sortierstation, so daß eine hohe Sortierleistung erreichbar ist.

Weitere Merkmale der Erfindung sind in der folgenden Beschreibung und in den Unteransprüchen dargelegt.

Ein Ausführungsbeispiel der Erfindung ist in der Zeichnung
dargestellt und wird im folgenden näher erläutert.
Es zeigen:
Fig. 1 die Draufsicht auf die Sortiervorrichtung;
Fig. 2 die Schnittansicht gem. Linie II - II in Fig. 1;
Fig. 3 die Schnittansicht gem. Linie III - III in Fig. 1;
Fig. 4 einen Querschnitt durch den Querförderer;
Fig. 5 die Schnittansicht gem. Linie V - V in Fig. 4;
Fig. 6 einen Teilschnitt durch den Querförderer;
Fig. 7 einen Teilschnitt durch den Querförderer in einem
        Hauptförderer anderer Ausführung.

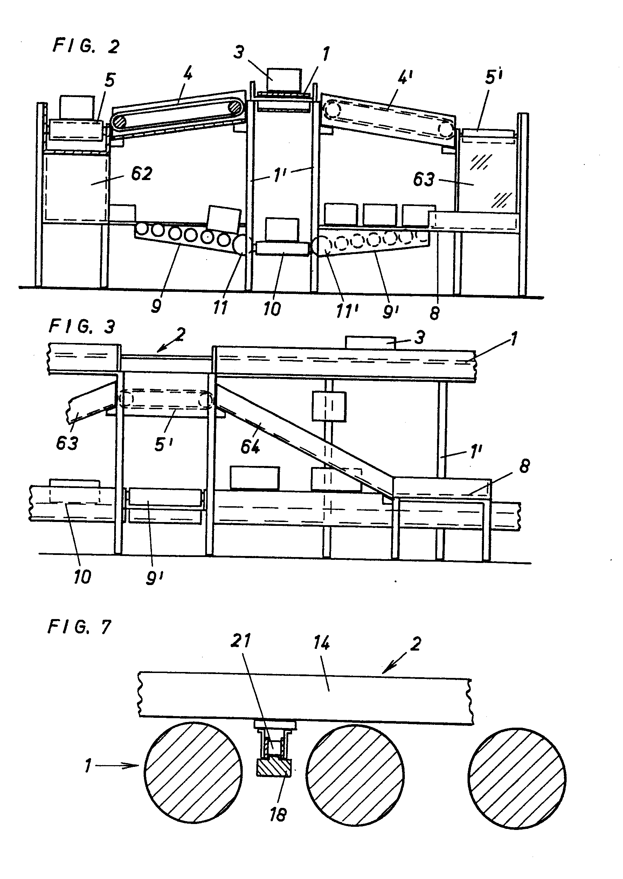

Die Sortiervorrichtung weist gem. den Fig. 1 bis 3 zum Herantransportieren der zu sortierenden Stückgüter einen auf einem
an einem Gestell 1' gelagerten, angetriebenen Hauptförderer 1
auf, der als Band- oder Rollenförderer ausgebildet sein kann.
Im Bereich der Sortiervorrichtung ist im Hauptförderer 1 ein
Querförderer 2 vorgesehen, um das Stückgut 3 wahlweise nach
rechts oder links auszuschleusen. Zu diesem Zweck ist an beiden Enden des Querförderers 2 je ein quer zum Hauptförderer 1
angeordneter Nebenförderer 4 bzw. 4' angeschlossen. Dieser ist
vorzugsweise als angetriebener Band- oder Rollenförderer ausgebildet. Dem Nebenförderer 4 bzw. 4' schließt sich ein senkrecht zu diesem, also parallel zum Hauptförderer 1 gelagerter kurzer Verteilförderer 5 bzw. 5', insbesondere Bandförderer, an, der durch einen nicht dargestellten Motor je nach Bedarf in der einen oder anderen Drehrichtung angetrieben werden kann. Jedes Ende des Verteilförderers 5 bzw. 5' mündet in eine Zwischenbahn 61, 62 bzw. 63, 64. Diese ist nach unten geneigt und vorzugsweise als Rutsche ausgebildet. Sie endet in der jeweiligen Sortierstation 71, 72 bzw. 73, 74. Diese besteht im wesentlichen aus einer waagerechten Plattform 8, die parallel an der Zwischenbahn 61, 62, 63, 64 zurückgeführt ist und so Platz zum Abstellen, Ablegen und Sortieren der Stückgüter bietet.

Unterhalb des Nebenförderers 4 bzw. 4' und längsparallel zu diesem ist ein Zuförderer 9 bzw. 9' vorgesehen, der zum Transportieren in Richtung einer unterhalb des Hauptförderers 1 angeordneten Abförderbahn 10 ausgebildet ist. An den Zuförderer 9 bzw. 9' schließt sich beiderseits längsseits und auf etwa gleicher Höhe die Plattform 8 an, so daß auf dieser liegendes Stückgut 3' direkt auf den Zuförderer 9 bzw. 9' geschoben werden kann. Letzterer ist vorzugsweise als Schwerkraftrollenförderer ausgebildet und besitzt als letzte Rolle vor dem Abführförderer 10 eine gegenüber der Transportebene des Zuführförderers 9 bzw. 9' etwas angehoben gelagerte, antreibbare Laderolle 11 bzw. 11'.

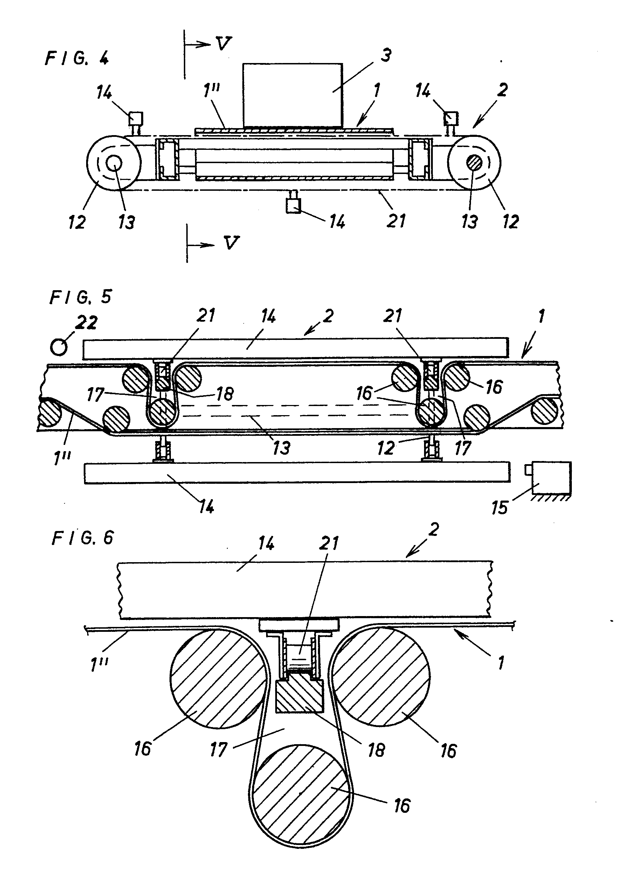

Gem. den Fig. 4 bis 6 ist der Querförderer 2 als Kettenschieber ausgebildet. Zu diesem Zweck sind quer zur Transportrichtung des Hauptförderers 1 und parallel zu dessen Transportebene mindestens zwei parallele, geschlossene Kettenzüge 21 vorgesehen, die beiderseits außerhalb des Hauptförderers 1 über Kettenräder 12 gelegt und umgelenkt sind. Letztere sind paarweise miteinander durch Wellen 13 starr gekoppelt, wobei an einer Welle ein nicht dargestellter, reversierbar antreibbarer Getriebemotor angeschlossen ist. Das obere Trum der Kettenzüge 21 liegt unterhalb der Transportebene des Hauptförderers 1, so daß über die Kettenzüge 21 auf dem Hauptförderer 1 Stückgut 3 transportiert werden kann. Zum Ausschleusen des Stückgutes 3 dient ein stangenförmiger, an den Kettenzügen 21 befestigter Schieber 14, der oberhalb der Transportebene, parallel zur Längsachse des Hauptförderers 1 und quer zu diesem über den Hauptförderer 1 hinwegbewegt werden kann. Um kurze Vorlaufzeiten zu erhalten, sind mehrere Schieber 14 vorgesehen, von denen in der Ruhestellung des Querförderers 2 zwei an beiden Seiten dicht neben dem Hauptförderer 1 stehen, während ein dritter Schieber 14 am unteren Trum hängt und als Markierung für einen Schalter 15, wie Lichtschranke, Näherungsschalter o. dgl., dient, um den Antrieb auszuschalten. Da die Kettenzüge 21 immer nur um eine Teilung bewegt werden, sind die Schieber 14 in gleichen Abständen angeordnet.

Ist der Hauptförderer 1 als Bandförderer ausgebildet, dann ist das Band 1'' im Bereich der Kettenzüge 21 über drei Umlenkrollen 16 nach unten in Form einer nach oben offenen Schleife 17 geführt. Innerhalb dieser Schleife 17 ist das obere Trum der Kettenzüge 21 auf einem Stützprofil 18 geführt, wobei der Schieber 14 oberhalb des Bandes 1'' liegt und neben dem Band 1'' durch die Kettenräder 12 umgelenkt wird. Ist gem. Fig. 7 der Hauptförderer 1 als Rollenförderer ausgebildet, dann erfolgt die Lagerung der Kettenzüge 21 entsprechend zwischen den Rollen.

Es ist ersichtlich, daß ein Stückgut 3 nach Passieren einer am Hauptförderer 1 angebrachten Schalteinrichtung 22, wie Lichtschranke, Leseeinrichtung o. dgl., durch den dadurch eingeschalteten Querförderer 2 auf den Nebenförderer 4 oder 4' geschoben wird, und zwar, ohne daß der Hauptförderer 1 angehalten wird. Der Querförderer 2 bewegt sich ferner mit hoher Geschwindigkeit, so daß auf dem Hauptförderer 1 Stückgüter 3 auch in dichter Gutfolge transportiert werden können. Sobald das Stückgut 3'' den Verteilförderer 5 bzw. 5' erreicht hat und auf diesem liegt, setzt sich dieser in einer Richtung in Bewegung, und das Stückgut 3'' rutscht auf einer Zwischenbahn 61, 62, 63 oder 64 nach unten auf die Plattform 8 einer der Sortierstationen 71, 72, 73 oder 74. Hier wird nun durch eine Person 19 die Identität des Stückgutes 3''' festgestellt und die Art, Stückzahl u. dgl. in die Eingabe eines zentralen Speichers gegeben. Gleiche Warenarten oder Warengruppen werden in einem der Warenart bzw. -gruppe zugeordneten Behälter 3' gesammelt. Dieser wird nach dem Füllen auf den Zuförderer 9 bzw. 9' geschoben, auf dem sich dieser bis zum Anschlag an die Laderolle 11 bzw. 11' bewegt. Sobald auf der Abförderbahn 10 eine ausreichend große Lücke zwischen aufeinanderfolgenden Stückgütern vorhanden ist, wird der Antrieb der Laderolle 11 bzw. 11' eingeschaltet, das Stückgut 3' auf die Abförderbahn 10 geschoben und auf dieser dem zugeordneten Lager zugeführt.

Selbstverständlich wird durch entsprechend angeordnete Sensoren oder entsprechende Steuerorgane jeweils festgestellt, in welche Richtung das Stückgut auf dem Querförderer 2 oder dem Verteilförderer 5 bzw. 5' transport werden kann. Vor dem Ingangsetzen des Querförderers 2 wird also festgestellt, welcher Verteilförderer 5 oder 5' frei ist. Sind beide besetzt, bleibt der Querförderer 2 in Ruhe, das Stückgut 3 wird auf dem Hauptförderer 1 weitertransportiert. Entsprechend wird vor dem Einschalten des Verteilförderers 5 bzw. 5' ermittelt, ob das untere Ende der Zwischenbahn 61, 62, 63 oder 64 frei ist. Gegebenenfalls wird solange gewartet, bis die Plattform 8 an dieser Stelle frei ist.

Das Stückgut kann einzeln, unabhängig von der Größe, oder auch in Behältern transportiert werden.

Patentansprüche

1. Sortiervorrichtung für Stückgut mit einem zufördernden Hauptförderer, in dem ein Querförderer angeordnet ist, an den ein Nebenförderer angeschlossen ist, dadurch gekennzeichnet, daß am Ausgang des Nebenförderers (4, 4') und senkrecht zu diesem ein reversierbar antreibbarer Verteilförderer (5, 5') vorgesehen ist, der mit seinen beiden Enden über Zwischenbahnen ( 61, 62 bzw. 63, 64) mit je einer Sortierstation (71, 72, 73, 74) verbunden ist, denen eine Abförderbahn (10) gemeinsam zugeordnet ist.

2. Sortiervorrichtung nach Anspruch 1, dadurch gekennzeichnet, daß der Hauptförderer (1), der Nebenförderer (4, 4') und die Verteilförderer (5, 5') mit den Zwischenbahnen (61, 62, 63, 64) etwa U-förmig angeordnet sind und die Abförderbahn (10) unterhalb des Hauptförderers (1) angeordnet ist.

3. Sortiervorrichtung nach Anspruch 1 oder 2, dadurch gekennzeichnet, daß zwischen Sortierstation (71, 72, 73, 74) und Abförderbahn (10) ein Zuförderer (9, 9') vorgesehen und der Zuförderer (9, 9') unterhalb des Nebenförderers (4, 4') angeordnet ist.

4. Sortiervorrichtung nach mindestens einem der Ansprüche 1 bis 3, dadurch gekennzeichnet, daß der Querförderer (2) reversierbar antreibbar ausgebildet und an beiden Seiten des Querförderers (2) je ein Nebenförderer (4, 4') mit Verteilförderer (5, 5'), Zwischenbahnen (61, 62, 63, 64), Sortierstationen (71, 72, 73, 74) und Zuförderer (9, 9') angeordnet ist.

5. Sortiervorrichtung nach mindestens einem der Ansprüche 1 bis 4, dadurch gekennzeichnet, daß der Querförderer (2) im Hauptförderer (1) als Kettenabschieber mit umlaufenden, parallelen und unterhalb der Transportebene des Hauptförderers (1) und quer zu diesem geführten Kettenzügen (21) ausgebildet ist, an denen oberhalb der Transprtebene bewegbare Schieber (14) angeordnet sind.

6. Sortiervorrichtung nach Anspruch 5, dadurch gekennzeichnet, daß der Hauptförderer (1) als Bandförderer ausgebildet ist, dessen Band (1'') im Bereich der Kettenzüge (21) durch Umlenkrollen (16) in nach oben offene Schleifen (17) umgelenkt ist, in denen das obere Trum der Kettenzüge (21) gelagert ist.

7. Sortiervorrichtung nach Anspruch 5 oder 6, dadurch gekennzeichnet, daß an den Kettenzügen (21) mehrere, in gleichen Abständen angeordnete Schieber (14) befestigt sind, von denen in der Ruhestellung je einer seitlich neben dem Hauptförderer (1) steht.

8. Sortiervorrichtung nach Anspruch 7, dadurch gekennzeichnet, daß drei Schieber (14) vorgesehen sind, von denen der jeweils am unteren Trum der Kettenzüge (21) befindliche Schieber (14) als Kontakt für einen Schalter (15) zum Ausschalten des Querförderer-Antriebs dient.

9. Sortiervorrichtung nach mindestens einem der Ansprüche 1 bis 8, dadurch gekennzeichnet, daß der Zuförderer (9, 9') als Schwerkraft-Rollenbahn ausgebildet ist, deren letzte Rolle vor der Abförderbahn (10) als antreibbare, vorzugsweise gegenüber der Transportebene des Zuförderers (9, 9') etwas angehoben gelagerte Laderolle (11, 11') vorgesehen ist.

FIG. 1

FIG. 2

FIG. 3

FIG. 7

FIG. 4

FIG. 5

FIG. 6